# EUROPEAN PATENT APPLICATION

(11) **EP 1 750 267 A1**
(43) Date of publication of application: **07.02.2007**
(21) Application number: 06254033.1
(22) Date of filing: 01.08.2006
(51) Int. Cl.: G11B 27/034, G11B 27/32

(54) **Information-processing apparatus, recording medium and information-processing method**

(30) Priority: 01.08.2005 JP 2005223315
(71) Applicant: SONY CORPORATION, Tokyo 141-0001 (JP)
(72) Inventor: Kinouchi, Takashi, Sony Corporation, Shinagawa-ku Tokyo 141-0001 (JP); Tsukazaki, Hideo, Sony Corporation, Shinagawa-ku Tokyo 141-0001 (JP); Sakata, Junichiro, Sony Corporation, Shinagawa-ku Tokyo 141-0001 (JP); Miyazawa, Masaaki, Sony Corporation, Shinagawa-ku Tokyo 141-0001 (JP); Seki, Yasuharu, Sony Corporation, Shinagawa-ku Tokyo 141-0001 (JP); Konno, Tatsuya, Sony Corporation, Shinagawa-ku Tokyo 141-0001 (JP)
(74) Representative: Tyson, Robin Edward

(57) **Abstract**

Disclosed herein is an information-processing apparatus capable of transmitting a content to a portable reproduction apparatus which can reproduce the content, including: a content storage section; a transmission content acquisition section; a deletion completion list acquisition section; a transmission permission/inhibition determine section; and a content transmission section.

## Description

### CROSS REFERENCES TO RELATED APPLICATIONS

The present invention contains subject matter related to Japanese Patent Application JP 2005-223315 filed in the Japanese Patent Office on August 1, 2005, the entire contents of which being incorporated herein by reference.

### BACKGROUND OF THE INVENTION

### 1. Field of the Invention

This invention relates to an information-processing apparatus, a recording medium and an information-processing method, and more particularly to an information-processing apparatus, a recording medium and an information-processing method wherein a content is transmitted to a portable reproduction apparatus which can reproduce a content.

### 2. Description of the Related Art

In recent years, a music player of the portable type which incorporates a hard disk of a large capacity has been provided. In order to fetch a music content into such a portable music player as just mentioned, according to a method, the portable music player is connected to a music distribution server through the Internet so as to download the music content from the music distribution server. According to another method, the portable music player is connected to some other information-processing apparatus such as a personal computer so that a music content held by the information-processing apparatus is transferred to the potable music player. Particularly according to the latter method, a plurality of music contents held by the information-processing apparatus can be transferred collectively to the portable music player. Such an information communication system as just mentioned is disclosed, for example, in Japanese Patent Laid-Open No. 2001-93226. According to the information communication system of Japanese Patent Laid-Open No. 2001-93226, the user can refer to a transfer list which can be edited to transfer a plurality of music contents included in the transfer list collectively from a server to a portable recording and reproduction apparatus. Meanwhile, also an auto-sync function has been provided recently. According to the auto-sync function, at a timing at which a portable music player is connected to an information-processing apparatus or at some other suitable timing, a large number of music contents possessed by an information-processing apparatus are automatically transferred to the portable music player. Consequently, the music contents stored in the information-processing apparatus and music contents stored in the portable music player are automatically synchronized with each other.

### SUMMARY OF THE INVENTION

However, automatic transfer of contents without allowing the user to select contents to be transferred as described above gives rise to a problem that also a content which has been deleted once from a portable music player because the content is "not favorable" to the user or from some other reason is transferred again.

It is desirable to provide an information-processing apparatus, a recording medium and an information-processing method which allow contents to be transferred automatically while a content deleted once from a portable reproduction apparatus used for reproduction of a content such as a portable music player is not transferred again to the portable reproduction apparatus.

According to an embodiment of the present invention, there is provided an information-processing apparatus capable of transmitting a content to a portable reproduction apparatus which can reproduce the content, including a content storage section configured to store contents in a coordinated relationship with identifiers individually for identifying the contents, a transmission content acquisition section configured to acquire the identifier of any content to be transmitted to the portable reproduction apparatus from the content storage section, a deletion completion list acquisition section configured to acquire a deletion completion list which includes the identifier of any content deleted from the portable reproduction apparatus, a transmission permission/inhibition determine section configured to permit transmission of a content to the portable reproduction apparatus when the identifier of the content acquired by the transmission content acquisition section is not included in the deletion completion list acquired by the deletion completion list acquisition section, and a content transmission section configured to transmit any content whose transmission is permitted by the transmission permission/inhibition determine section to the portable reproduction apparatus.

In the information-processing apparatus, the transmission permission/inhibition determine section determines based on the deletion completion list acquired from the portable reproduction apparatus, whether or not transmission of a content should be permitted. The deletion completion list includes the identifier of each content deleted from the reproduction apparatus. The transmission permission/inhibition determine section permits transfer of any content whose identifier is not included in the deletion completion list. In contrast, transfer of any content whose identifier is included in the deletion completion list is not permitted, and the information-processing apparatus does not transfer the content to the portable reproduction apparatus. In other words, the information-processing apparatus does not transfer any content, which is deleted from the portable reproduction apparatus, to the portable reproduction apparatus again.

The information-processing apparatus may further include a deletion execution section configured to delete a content stored in the portable reproduction apparatus connected to the information-processing apparatus from the portable reproduction apparatus, and a deletion completion list updating section configured to add the identifier of the content deleted by the deletion execution section to the deletion completion list. In the information-processing apparatus having the configuration just described, when a content is deleted from the portable reproduction apparatus, such deletion of the content can be reflected on the deletion completion list of the portable reproduction apparatus.

The information-processing apparatus may further include a connection detection section configured to detect communication connection of the information-processing apparatus to the portable reproduction apparatus, and a deletion object list acquisition section configured to acquire, when the communication connection to the portable reproduction apparatus is detected by the connection detection section, a deletion object list which includes the identifier of any content whose deletion is requested on the portable reproduction apparatus from the portable reproduction apparatus, the deletion execution section deleting the content corresponding to any identifier included in the deletion object list from the portable reproduction apparatus. With the information-processing apparatus having the configuration just described, a content registered in advance in the deletion object list in the portable reproduction apparatus can be deleted from the portable reproduction apparatus. Further, when communication connection between the information-processing apparatus and the portable reproduction apparatus is detected by the connection detection section, the information-processing apparatus performs acquisition of the deletion object list and deletion of a content. Therefore, when the portable reproduction apparatus is connected to the information-processing apparatus, the portable reproduction apparatus can let the information-processing apparatus delete any content registered in the deletion object list thereof.

The information-processing apparatus may further include a selection section configured to allow selection of a content whose transfer to the portable reproduction apparatus is requested, and a deletion completion list updating section configured to erase, when the identifier of the content selected by the selection section is included in the deletion completion list, the identifier from the deletion completion list. In the information-processing apparatus having the configuration just described, the identifier of any content deleted through the selection section is excluded from the deletion completion list. Therefore, the information-processing apparatus can transfer a content, which is selected through the selection section, for example, by the user, to the portable reproduction apparatus even if the content is deleted once from the portable reproduction apparatus.

The content transmission section may transmit the content selected by the selection section to the portable reproduction apparatus irrespective of whether or not the identifier of the content is included in the deletion completion list. In the information-processing apparatus having the configuration just described, any content selected by the selection section can be transferred to the portable reproduction apparatus even if the content is included in the deletion completion list.

The information-processing apparatus may further include a management list acquisition section configured to acquire a management list in which the identifiers of the contents stored in the portable reproduction apparatus are included from the portable reproduction apparatus, the transmission content acquisition section acquiring the identifier of any content which is not included in the management list from the portable reproduction apparatus. In the information-processing apparatus having the configuration just described, each content which is not stored in the portable reproduction apparatus can be transferred to the portable reproduction apparatus. In other words, such a situation that the information-processing apparatus transfers a content held already by the portable reproduction apparatus in an overlapping relationship to the portable reproduction apparatus can be prevented.

It is to be noted that each of the deletion object list acquisition section, deletion completion list acquisition section and management list acquisition section may move the corresponding list from the portable reproduction apparatus side to the information-processing apparatus side. Or, each of the deletion object list acquisition section, deletion completion list acquisition section and management list acquisition section may merely read in the corresponding list provided on the portable reproduction apparatus.

According to another embodiment of the present invention, there is provided a storage medium on or in which a computer program for causing a computer to function as the information-processing apparatus described above is stored. The computer program is read out from the storage medium and stored into a storage section provided in the computer. Then, the computer program is read out from the storage section and executed by a CPU provided in the computer to cause the computer to function as the information-processing apparatus. The storage medium may typically be a magnetic disk or an optical disk.

According to a further embodiment of the present invention, there is provided an information-processing method for an information-processing apparatus for transmitting a content to a portable reproduction apparatus which can reproduce the content, including a transmission content acquisition step of acquiring, from a content storage section in which contents are stored in a coordinated relationship with identifiers individually for identifying the contents, the identifier of any content to be transmitted to the portable reproduction apparatus, a deletion completion list acquisition step of acquiring a deletion completion list which includes the identifier of any content deleted from the portable reproduction apparatus from the portable reproduction apparatus, a transmission permission/inhibition determine step of permitting transmission of a content to the portable reproduction apparatus when the identifier of the content acquired at the transmission content acquisition step is not included in the deletion completion list acquired at the deletion completion list acquisition step, and a content transmission step of transmitting any content whose transmission is permitted at the transmission permission/inhibition determine step to the portable reproduction apparatus. The transmission content acquisition step and the deletion completion list acquisition step may be in any order, or in other words, any of the two steps may be executed previously.

The information-processing method may further include a deletion execution step of deleting a content stored in the portable reproduction apparatus connected to the information-processing apparatus from the portable reproduction apparatus, and a deletion completion list updating step of adding the identifier of the content deleted at the deletion execution step to the deletion completion list. The deletion execution step may be executed at any point of time. The deletion completion list updating step is preferably executed immediately after the deletion execution step or before the transmission permission/inhibition determine step.

The information-processing method may further include a connection detection step of detecting communication connection of the information-processing apparatus to the portable reproduction apparatus, and a deletion object list acquisition step of acquiring, when the communication connection to the portable reproduction apparatus is detected at the connection detection step, a deletion object list which includes the identifier of any content whose deletion is requested on the portable reproduction apparatus from the portable reproduction apparatus, the content corresponding to any identifier included in the deletion object list being deleted from the portable reproduction apparatus at the deletion execution step.

The information-processing method may further include a selection step of allowing selection of a content whose transfer to the portable reproduction apparatus is requested, and a deletion completion list updating step of erasing, when the identifier of the content selected at the selection step is included in the deletion completion list, the identifier from the deletion completion list.

The information-processing method may further include a management list acquisition step of acquiring a management list in which the identifiers of the contents stored in the portable reproduction apparatus are included from the portable reproduction apparatus, the identifier of any content which is not included in the management list being acquired from the portable reproduction apparatus at the transmission content acquisition step.

With the information-processing apparatus, information-processing method and storage medium, transfer of contents to a portable reproduction apparatus which performs reproduction of a content can be performed automatically while any content deleted from the portable reproduction apparatus is not transferred to the portable reproduction apparatus again.

The above and other features and advantages of the present invention will become apparent from the following description and the appended claims, taken in conjunction with the accompanying drawings in which like parts or elements denoted by like reference characters.

### BRIEF DESCRIPTION OF THE DRAWINGS

FIG. 1 is a diagrammatic view showing a general configuration of a system in which an information-processing apparatus according to a preferred embodiment of the present invention is incorporated;
FIG. 2 is a block diagram showing a hardware configuration of the information-processing apparatus according to a preferred embodiment of the present invention;
FIG. 3 is a block diagram showing a functional configuration of the information-processing apparatus according to a preferred embodiment of the present invention;
FIGS. 4 and 5 are block diagrams illustrating content transfer processes of the information-processing apparatus according to a preferred embodiment of the present invention;
FIG. 6 is a flow diagram illustrating a content deletion process of the information-processing apparatus from a portable reproduction apparatus according to a preferred embodiment of the present invention;
FIG. 7 is a flow chart illustrating a content transfer process of the information-processing apparatus according to a preferred embodiment of the present invention;
FIG. 8 is a flow chart illustrating a content deletion process of the portable reproduction apparatus according to a preferred embodiment of the present invention;
FIG. 9 is a flow chart illustrating a content deletion process of the information-processing apparatus according to a preferred embodiment of the present invention;
FIG. 10 is a flow chart illustrating a content reproduction process of the portable reproduction apparatus according to a preferred embodiment of the present invention; and
FIGS. 11A and 11B are schematic views showing a deletion object list and a playlist of the portable reproduction apparatus according to a preferred embodiment of the present invention, respectively.

### DETAILED DESCRIPTION OF THE PREFERRED EMBODIMENTS

In the following, an information-processing apparatus according to a preferred embodiment of the present invention is described. In the present embodiment, the present invention is applied to an information-processing apparatus 100 which transfers music contents to a portable reproduction apparatus 102 which can reproduce a music content. It is to be noted that, while music contents are described particularly as contents applied in the present embodiment, the contents which can be applied in the preferred embodiment of the present invention are not limited to such music contents. In other words, also various other contents can be applied including, for example, a sound (Audio) content of a lecture, a radio program or the like, an image (Video) content formed from a still picture or pictures or moving pictures which form a movie, a television program, a video program, a photograph, a painting, a chart or the like, an electronic book (E-book), a game or software.

### <General Configuration>

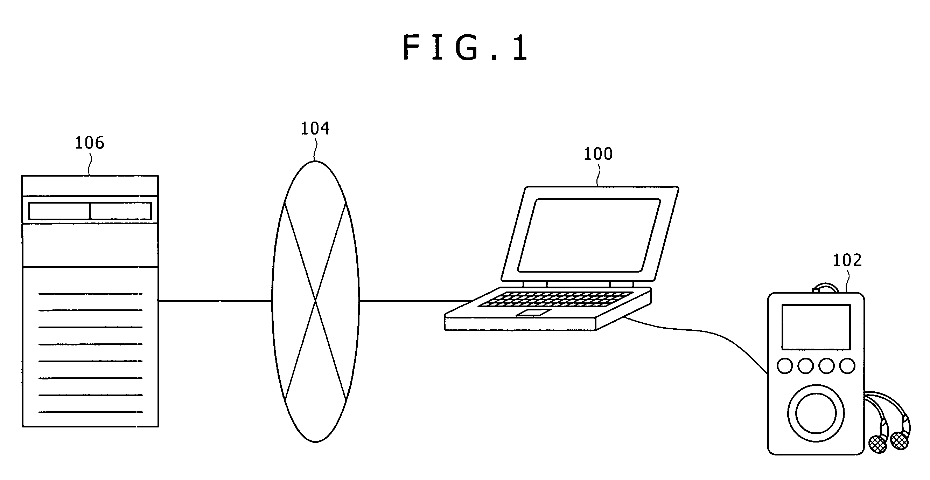

Referring first to FIG. 1, there is shown a system which incorporates the information-processing apparatus according to the preferred embodiment of the present invention. The information-processing apparatus 100 is a computer which can transfer a music content (hereinafter referred to merely as content) as described above. The information-processing apparatus 100 may be, for example, a personal computer (which may be hereinafter referred to simply as PC), an audio player, a game machine or the like. The information-processing apparatus 100 stores contents, for example, downloaded from a content distribution server 106 through a network 104. The information-processing apparatus 100 further stores contents acquired by ripping from an external recording medium such as a compact disk (which may be hereinafter referred to simply as CD).

The portable reproduction apparatus 102 can be connected to the information-processing apparatus 100. The portable reproduction apparatus 102 is a computer which can reproduce a content. The portable reproduction apparatus 102 may be, for example, a portable music player which incorporates a hard disk drive, a PDA (Personal Digital Assistant), a cellular phone or the like. The portable reproduction apparatus 102 includes a storage apparatus such as a hard disk drive and stores contents into the storage apparatus. The portable reproduction apparatus 102 receives a content transferred thereto from the information-processing apparatus 100 and stores the received content into the storage apparatus. Further, a content stored in the storage apparatus of the portable reproduction apparatus 102 is deleted by the information-processing apparatus 100. In other words, the portable reproduction apparatus 102 itself does not delete a content stored in the storage device thereof but lets the information-processing apparatus 100 connected thereto delete the content. The portable reproduction apparatus 102 includes a management list, a deletion object list and a deletion completion list as hereinafter described. The lists are used upon transfer or deletion of a content by the information-processing apparatus 100.

The information-processing apparatus 100 can transmit contents stored therein to the portable reproduction apparatus 102 connected thereto. The information-processing apparatus 100 can transmit a content selected by the user to the portable reproduction apparatus 102. Further, the information-processing apparatus 100 can automatically transmit a plurality of contents stored in the information-processing apparatus 100 to the portable reproduction apparatus 102 to synchronize the portable reproduction apparatus 102 and the information-processing apparatus 100 with each other so that they commonly have the same contents. However, where a plurality of contents are automatically transmitted, that is, where not contents selected by the user are transmitted but contents selected by the information-processing apparatus 100 are transmitted, the possibility is high that also a content whose transfer to the portable reproduction apparatus 102 is not desired by the user may be transmitted. For example, a content deleted once from the portable reproduction apparatus 102 by the user may possibly be transmitted to the portable reproduction apparatus 102 again. Therefore, the information-processing apparatus 100 according to the present embodiment controls so that a content deleted once from the portable reproduction apparatus 102 connected thereto is not transferred to the portable reproduction apparatus 102 unless the user explicitly selects the content as an object of transfer. In the following, the information-processing apparatus 100 is described in detail.

### <Hardware Configuration of the Information-Processing Apparatus>

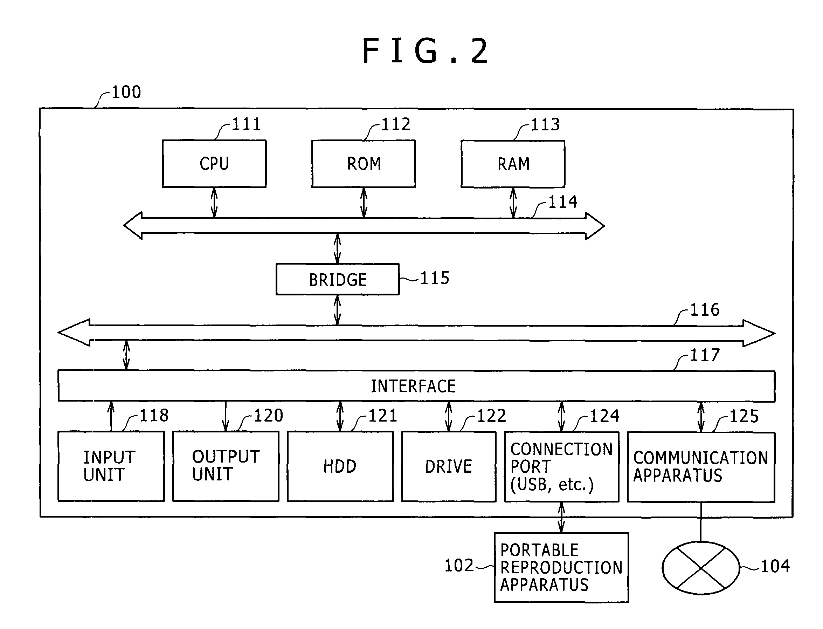

First, a hardware configuration of the information-processing apparatus 100 is described roughly with reference to FIG. 2. It is to be noted that FIG. 2 schematically shows an example of a hardware configuration of the information-processing apparatus 100 according to the present embodiment.

The information-processing apparatus 100 includes, for example, a CPU (Central Processing Unit) 111, a ROM (Read Only Memory) 112, a RAM (Random Access Memory) 113, a host bus 114, a bridge 115, and an external bus 116. The information-processing apparatus 100 further includes an interface 117, an input unit 118, an output unit 120, a storage apparatus (HDD) 121, a drive 122, a connection port 124, and a communication apparatus 125.

The CPU 111 functions as an arithmetic operation processing apparatus and a control apparatus and operates in accordance with various programs stored in the ROM 112 or the HDD 121 to control the components in the information-processing apparatus 100. As a particular one of the processes, for example, a process of determining whether or not a content may be transmitted is executed.

The ROM 112 stores programs, arithmetic operation parameters and so forth to be used by the CPU 111. The RAM 113 temporarily stores a program to be used for execution by the CPU 111, parameters which vary suitably during the execution and so forth. Further, the RAM 113 can be utilized also to temporarily store the deletion completion list, deletion object list, management object list and so forth hereinafter described acquired from the portable reproduction apparatus 102 by the information-processing apparatus 100. The CPU 101, ROM 102 and RAM 103 are connected to each other by the host bus 114 formed from a CPU bus or the like.

The host bus 114 is connected to the external bus 116 such as a PCI (Peripheral Component Interconnect/Interface) bus or the like through the bridge 115.

The input unit 118 is formed from operation elements such as, for example, a mouse, a keyboard, a touch panel, buttons, switches and levers, an input control circuit for producing and outputting an input signal to the CPU 111, and so forth. The user of the information-processing apparatus 100 can operate the input unit 118 to input various data to the information-processing apparatus 100 and issue a command of a processing operation to the information-processing apparatus 100.

The output unit 120 is formed from a display apparatus such as, for example, a CRT (Cathode Ray Tube) display apparatus, a liquid crystal display (LCD) apparatus, an organic EL display apparatus, lamps or the like and a sound outputting apparatus such as a speaker. The output unit 120 outputs, for example, a reproduced content. In particular, the display apparatus displays a reproduced video content in the form of a text or an image as moving pictures or still pictures. Meanwhile, the sound outputting apparatus emits sound of a reproduced sound content or the like.

The HDD 121 is an apparatus for data storage formed as an example of a storage section of the information-processing apparatus 100 according to the present embodiment. The HDD121 stores program executed by CPU111, various data or the like. The HDD 121 stores various data of contents and so forth. Such a deletion completion list, a deletion object list, a management list and so forth mentioned hereinabove may be stored in the HDD 121.

The drive 122 is a reader/writer for a storage medium and is built in or externally provided for the information-processing apparatus 100. The drive 122 records/reproduces various data of contents and so forth on/from the removable recording medium such as a magnetic disk such as a HD, an optical disk such as a CD or a DVD, a magneto-optical disk such as an MO or a semiconductor memory loaded in the information-processing apparatus 100.

In particular, the drive 122 reads out data recorded on the removable recording medium and supplies the data to the RAM 113 connected thereto through the interface 117, external bus 116, bridge 115 and host bus 114. The CPU 111 stores the data into the HDD 121 or the like as occasion demands. Meanwhile, the drive 122 receives data stored in the ROM 112, the HDD 121 or the like, data newly produced or data acquired from an external apparatus from the CPU 111 and writes the data on the removable recording medium.

The connection port 124 is a port for allowing connection of the information-processing apparatus 100 to an external peripheral apparatus such as, for example, the portable reproduction apparatus 102 and has connection terminals such as USB terminals, IEEE1394 terminals or the like. The connection port 124 is connected to the CPU 111 and so forth through the interface 117, external bus 116, bridge 115, host bus 114 and so forth. Such a connection port 124 as just described allows the information-processing apparatus 100 to be connected to the portable reproduction apparatus 102 and so forth through the connection line and so forth such that they can communicate various data. The connection port 124 may allow communication connection to the portable reproduction apparatus 102 by any of wire communication and radio connection. For example, the connection portion 124 may comply with the Bluetooth, 802.11a/b/g or the like.

The communication apparatus 125 is a communication interface formed from a communication device or the like for connecting, for example, to the network 104. The communication apparatus 125 transmits and receives various data of contents to and from an external apparatus such the content distribution server 106 through the network 104. The communication interface may comply with the Ethernet or the Giga Ethernet. Further, the communication interface may comply, in an environment which allows direct communication with a radio access point, with the Bluetooth, 802.11a/b/g or the like.

### <Functional Configuration of the Information Processing Apparatus>

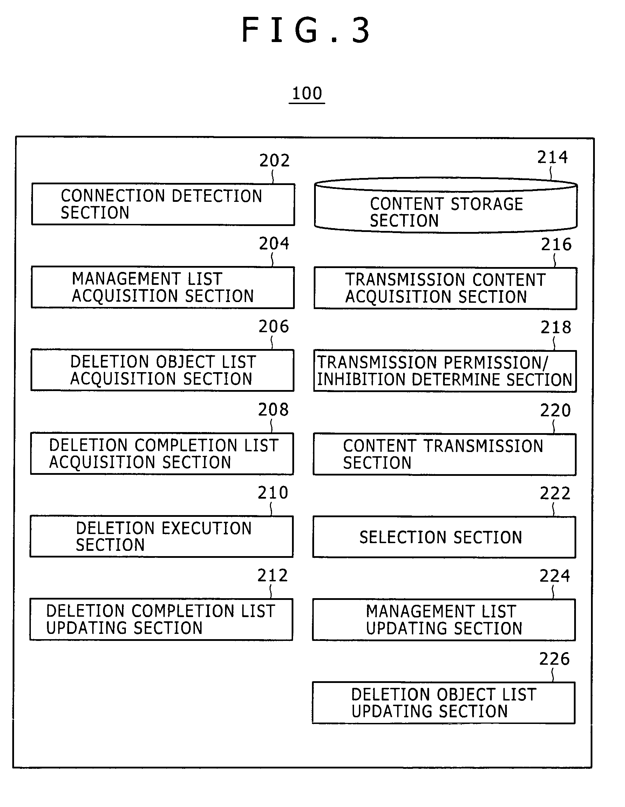

Now, a function configuration of the information-processing apparatus 100 is described with reference to FIG. 3. The information-processing apparatus 100 includes, as principal components thereof, a connection detection section 202, a management list acquisition section 204, a deletion object list acquisition section 206, a deletion completion list acquisition section 208, and a deletion execution section 210. The information-processing apparatus 100 further includes, as principal components thereof, a deletion completion list updating section 212, a content storage section 214, a transmission content acquisition section 216, and a transmission permission/inhibition determine section 218. The information-processing apparatus 100 includes, as principal components thereof, a content transmission section 220, a selection section 222, a management list updating section 224 and a deletion object list updating section 226.

The connection detection section 202 detects that the portable reproduction apparatus 102 is connected to the information-processing apparatus 100.

The management list acquisition section 204 acquires the management list from the portable reproduction apparatus 102 connected to the information-processing apparatus 100. The management list indicates a table of contents held by the portable reproduction apparatus 102. In particular, the management list includes an identifier of all contents stored in the storage apparatus of the portable reproduction apparatus 102. The management list is stored, for example, in the storage apparatus of the portable reproduction apparatus 102 and is updated by the portable reproduction apparatus 102 itself or the management list updating section 224 hereinafter described of the information-processing apparatus 100 connected to the portable reproduction apparatus 102. Such updating is performed when a content is stored newly into the storage apparatus of the portable reproduction apparatus 102 or when a content stored in the storage apparatus is deleted.

The deletion object list acquisition section 206 acquires the deletion object list from the portable reproduction apparatus 102 connected to the information-processing apparatus 100. The deletion object list indicates a table of contents which are expected or scheduled to be deleted from the portable reproduction apparatus 102. A content expected or scheduled to be deleted is a content whose deletion from the portable reproduction apparatus 102 is requested from the user. As described hereinabove, the portable reproduction apparatus 102 itself may not able to perform deletion of a content. Therefore, for example, if a request to delete a content is issued by the user, for example, through an inputting apparatus such as buttons provided on the portable reproduction apparatus 102, then the portable reproduction apparatus 102 writes the identifier of the content into the deletion object list. Then, the content is deleted from the storage apparatus of the portable reproduction apparatus 102 based on the deletion object list by the deletion execution section 210 hereinafter described of the information-processing apparatus 100 connected to the portable reproduction apparatus 102. Then, after the content is deleted by the deletion execution section 210, the deletion object list is updated by the deletion object list updating section 226 hereinafter described of the information-processing apparatus 100.

The deletion completion list acquisition section 208 acquires the deletion completion list from the portable reproduction apparatus 102 connected to the information-processing apparatus 100. The deletion completion list indicates a table of contents deleted from the portable reproduction apparatus 102. In particular, the deletion completion list includes an identifier of contents deleted from the storage apparatus of the portable reproduction apparatus 102. The deletion completion list is stored, for example, in the storage apparatus of the portable reproduction apparatus 102 and is updated by the deletion completion list updating section 212 hereinafter described of the information-processing apparatus 100. Such updating is performed when a content is deleted from the portable reproduction apparatus 102 by the deletion execution section 210 hereinafter described of the information-processing apparatus 100.

The deletion execution section 210 deletes a content from the portable reproduction apparatus 102 connected thereto. In particular, the deletion execution section 210 deletes contents corresponding to the identifiers included in the deletion object list from the storage apparatus of the portable reproduction apparatus 102 based on the deletion object list acquired from the portable reproduction apparatus 102 by the deletion object list acquisition section 206.

The deletion completion list updating section 212 updates the deletion completion list of the portable reproduction apparatus 102. In particular, when the deletion execution section 210 deletes a content from the portable reproduction apparatus 102, the deletion completion list updating section 212 erases the identifier of the pertaining content from the deletion completion list acquired from the portable reproduction apparatus 102 by the deletion completion list acquisition section 208. Further, if the identifier of a content selected by the selection section 222 hereinafter described is included in the deletion completion list, then the deletion completion list updating section 212 deletes the identifier from the deletion completion list.

The management list updating section 224 updates the management list of the portable reproduction apparatus 102. In particular, the management list updating section 224 adds or erases the identifier of a content to or from the management list acquired from the portable reproduction apparatus 102 by the management list acquisition section 204. Such addition or erasure of the identifier of a content is performed when the content transmission section 220 transfers the content to the portable reproduction apparatus 102 or when the deletion execution section 210 deletes the content from the portable reproduction apparatus 102.

The deletion object list updating section 226 updates the deletion object list of the portable reproduction apparatus 102. In particular, when the deletion execution section 210 deletes a content from the portable reproduction apparatus 102 based on the deletion object list, the deletion object list updating section 226 erases the identifier of the content from the deletion object list acquired from the portable reproduction apparatus 102 by the deletion object list acquisition section 206.

The content storage section 214 is a storage apparatus for storing contents. The information-processing apparatus 100 stores a content acquired from the content distribution server 106 or a ripped content into the content storage section 214. Further, the information-processing apparatus 100 can transfer a content stored in the content storage section 214 to the portable reproduction apparatus 102. The content storage section 214 stores data which form contents and identifiers of the contents in a coordinated relationship with each other.

The transmission content acquisition section 216 acquires a content to be transferred to the portable reproduction apparatus 102 from the content storage section 214. In particular, the transmission content acquisition section 216 acquires a content, for example, selected through the selection section 222 by the user from the content storage section 214 based on the identifier of the content. Further, in order to synchronize the contents of the information-processing apparatus 100 and the portable reproduction apparatus 102 with each other, the transmission content acquisition section 216 acquires all of the contents stored in the content storage section 214. Or, the transmission content acquisition section 216 acquires those of the contents stored in the content storage section 214 which do not exist in the portable reproduction apparatus 102 and make an object of synchronization. More particularly, the transmission content acquisition section 216 refers to the management list of the portable reproduction apparatus 102 acquired by the management list acquisition section 204 and acquires those contents which are not included in the management list from the content storage section 214. By such selective acquisition, such a situation that those contents which are already held by the portable reproduction apparatus 102 are transferred to the portable reproduction apparatus 102 can be prevented.

The transmission permission/inhibition determine section 218 determines whether or not transmission of a content acquired by the transmission content acquisition section 216 to the portable reproduction apparatus 102 should be permitted. In particular, the transmission permission/inhibition determine section 218 refers to the deletion completion list acquired from the portable reproduction apparatus 102 by the deletion completion list acquisition section 208 and controls based on the acquired deletion completion list so that the content corresponding to any identifier included in the deletion completion list may be inhibited from being transferred to the portable reproduction apparatus 102. A content having an identifier included in the deletion completion list is a content deleted from the portable reproduction apparatus 102. According to the configuration described above, such a situation that a content deleted once from the portable reproduction apparatus 102 is transferred to the portable reproduction apparatus 102 again can be prevented. However, if the user explicitly wants to have a content transferred, then the content is preferably transferred even if it is included in the deletion completion list. Therefore, when a content selected by the user through the selection section 222 is acquired from the content storage section 214, the determining process by the transmission permission/inhibition determine section 218 may be skipped so the content is provided to the content transmission section 220. Or, an identification flag may be set for each content selected through the selection section 222 by the transmission content acquisition section 216. In this instance, the transmission permission/inhibition determine section 218 may permit transfer of the content having the set identification flag to the portable reproduction apparatus 102 irrespective of whether or not the identifier of the content is included in the deletion completion list. Or else, the identifier of the content selected through the selection section 222 may be deleted from the deletion completion list by the management list updating section 224 before the transmission permission/inhibition determine section 218 performs the determining process.

The content transmission section 220 transmits any content whose transfer to the portable reproduction apparatus 102 is permitted by the transmission permission/inhibition determine section 218 to the portable reproduction apparatus 102 connected to the information-processing apparatus 100.

The selection section 222 is configured including the inputting apparatus such as a keyboard and a mouse provided on the information-processing apparatus 100 and provides information of a content selected through the inputting apparatus by the user to the transmission content acquisition section 216.

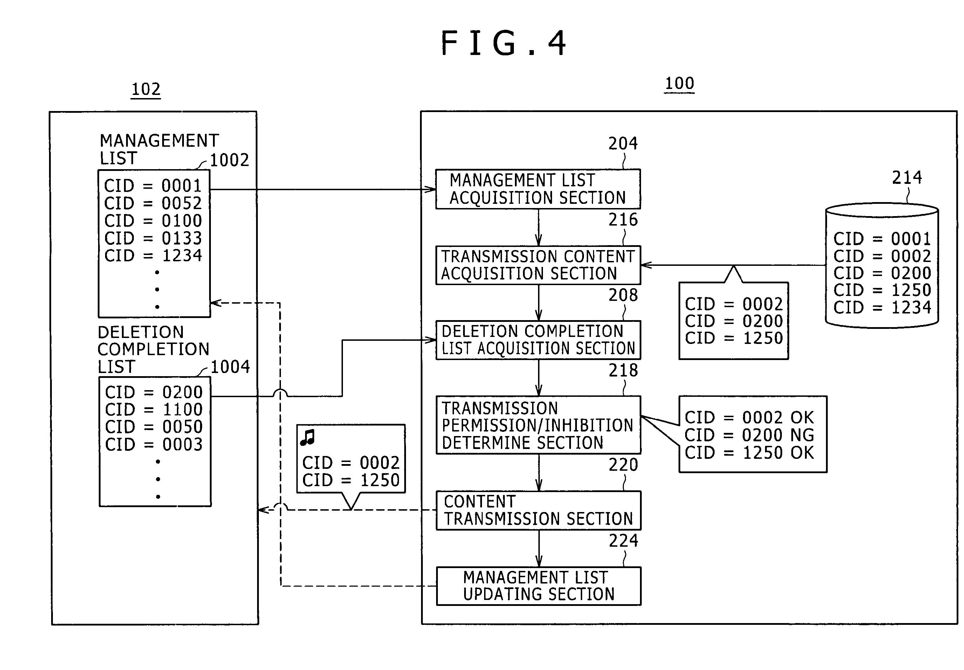

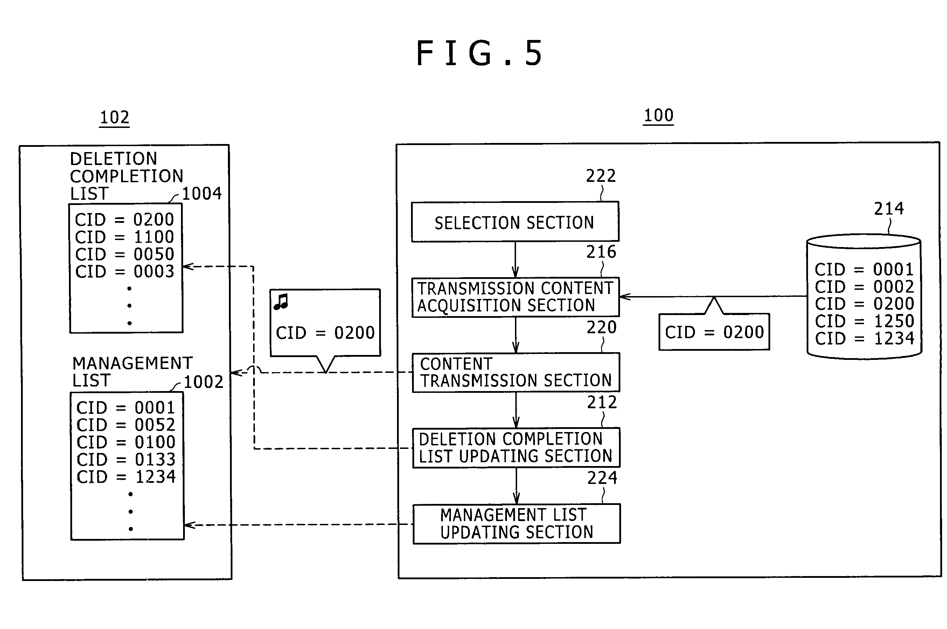

The information-processing apparatus 100 has such a functional configuration as described above. Now, a process of transferring a content to the portable reproduction apparatus 102 by the information-processing apparatus 100 is described in detail with reference to FIGS. 4 and 5.

### <Automatic Transfer Process of a Content>

First, a process when the information-processing apparatus 100 automatically transfers a content in order to establish synchronism of the stored contents between the information-processing apparatus 100 and the portable reproduction apparatus 102 is described with reference to FIG. 4. It is to be noted that such synchronization of contents may be performed, for example, at a timing at which the portable reproduction apparatus 102 is connected to the information-processing apparatus 100. Or, the synchronization may be performed at another timing at which execution of synchronization is designated through a GUI of the information-processing apparatus 100 by the user or after every predetermined interval of time.

When a timing for synchronization comes, the management list acquisition section 204 of the information-processing apparatus 100 acquires a management list 1002 from the portable reproduction apparatus 102. The management list acquisition section 204 provides the acquired management list 1002 to the transmission content acquisition section 216. The transmission content acquisition section 216 acquires those contents which are to be transferred to the portable reproduction apparatus 102 based on the management list 1002. In other words, the transmission content acquisition section 216 acquires those contents whose identifier is not included in the management list 1002 from the content storage section 214. In the example illustrated in FIG. 4, the transmission content acquisition section 216 acquires contents whose content identifier (CID) is CID = 0002, 0200, 1250 which are not included in the management list 1002 from the content storage section 214.

The deletion completion list acquisition section 208 of the information-processing apparatus 100 acquires a deletion completion list 1004 from the portable reproduction apparatus 102. Then, the identifiers of the contents acquired from the content storage section 214 by the transmission content acquisition section 216 and the deletion completion list 1004 acquired from the portable reproduction apparatus 102 by the deletion completion list acquisition section 208 are provided to the transmission permission/inhibition determine section 218. The transmission permission/inhibition determine section 218 controls so that those contents whose identifier is included in the deletion completion list 1004 are inhibited from being transferred to the portable reproduction apparatus 102. In the example illustrated in FIG. 4, from among the content identifiers of the contents acquired by the transmission content acquisition section 216, the content identifier CID = 0200 is included in the deletion completion list 1004. Therefore, the transmission permission/inhibition determine section 218 does not permit transfer of the content of the content identifier. Accordingly, transfer the contents whose content identifier is CID = 0002 and 1250 is permitted.

After permission/inhibition of the contents is determined by the transmission permission/inhibition determine section 218, the content transmission section 220 transmits those contents whose transfer is permitted to the portable reproduction apparatus 102. In the example illustrated in FIG. 4, the content transmission section 220 transmits the contents of the content identifier CID = 0002 and 1250 whose transfer is permitted to the portable reproduction apparatus 102.

Then, the management list updating section 224 causes the transfer of the contents to be reflected on the management list 1002 of the portable reproduction apparatus 102. In particular, the management list updating section 224 adds the identifiers of the contents transferred to the portable reproduction apparatus 102 by the content transmission section 220 to the management list 1002 of the portable reproduction apparatus 102.

According to the configuration described above, the information-processing apparatus 100 can transfer any content which is not held by the portable reproduction apparatus 102 to which it is connected to the portable reproduction apparatus 102. In this instance, since permission/inhibition of transmission of the content is determined based on the deletion completion list 1004, the information-processing apparatus 100 can prevent any content deleted by the portable reproduction apparatus 102 from being transferred to the portable reproduction apparatus 102 again. It is to be noted that the transmission permission/inhibition determine section 218 may determine permission/inhibition of transmission of a content based on the deletion completion list and also on the deletion object list.

### <Transfer Process of a Selected Content>

Now, a process of transferring a content selected by the user to the portable reproduction apparatus 102 by the information-processing apparatus 100 is described with reference to FIG. 5.

First, a content to be transferred is selected through the selection section 222 by the user. It is assumed here that the content of the content identifier CID = 0200 is selected. The transmission content acquisition section 216 acquires the selected content from the content storage section 214. Then, the transmission content acquisition section 216 provides the acquired content to the content transmission section 220. The content transmission section 220 transmits the content of the content identifier CID = 0200 to the portable reproduction apparatus 102.

Thereafter, the deletion completion list updating section 212 updates the deletion completion list 1004 of the portable reproduction apparatus 102, and the management list updating section 224 updates the management list 1002 of the portable reproduction apparatus 102. In other words, where the content identifier CID = 0200 is included in the deletion completion list 1004 of the portable reproduction apparatus 102, the deletion completion list updating section 212 deletes the identifier from the deletion completion list 1004. The management list updating section 224 adds the content identifier (CID = 0200) of the content transferred to the portable reproduction apparatus 102 to the management list 1002 of the portable reproduction apparatus 102.

According to the configuration described above, even if a content is deleted from the portable reproduction apparatus 102 once, if an instruction to transfer the content is issued explicitly by the user, then the information-processing apparatus 100 can transfer the content to the portable reproduction apparatus 102.

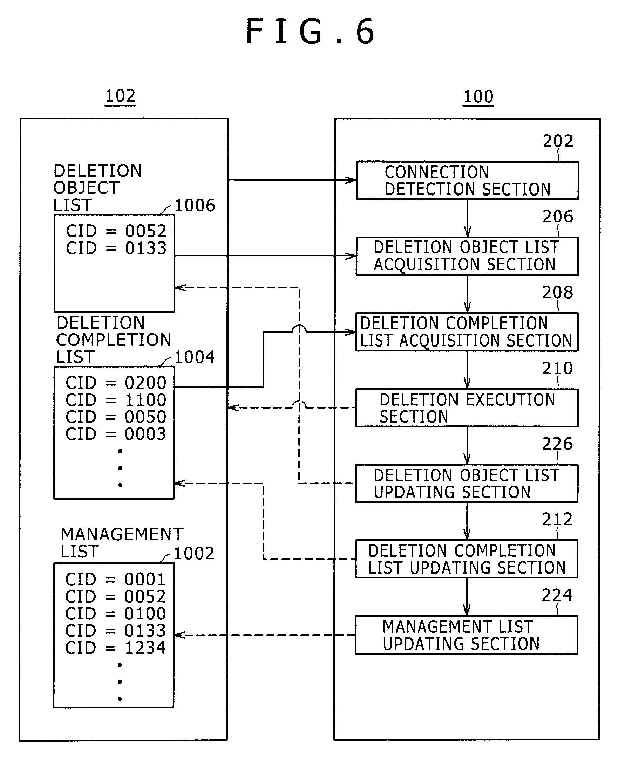

The process of transferring a content to the portable reproduction apparatus 102 from the information-processing apparatus 100 is such as described in detail above. Now, a process of deleting a content from the portable reproduction apparatus 102 by the information-processing apparatus 100 is described in detail with reference to FIG. 6.

### <Deletion Process of a Content>

The information-processing apparatus 100 may delete a content from the portable reproduction apparatus 102, for example, at a timing at which the portable reproduction apparatus 102 is connected to the information-processing apparatus 100. Or, such deletion may be performed at another timing at which an instruction to delete a content is issued through a GUI of the information-processing apparatus 100 by the user, or after every predetermined interval of time. In the following, it is assumed that a deletion process is executed at a timing at which the portable reproduction apparatus 102 is connected to the information-processing apparatus 100.

When the portable reproduction apparatus 102 is connected to the information-processing apparatus 100, the connection is detected by the connection detection section 202 of the information-processing apparatus 100. Then, the connection detection section 202 notifies the deletion object list acquisition section 206 of the detection of the connection to the portable reproduction apparatus 102.

The deletion object list acquisition section 206 acquires a deletion object list 1006 from the portable reproduction apparatus 102 connected to the information-processing apparatus 100. Further, the deletion completion list acquisition section 208 acquires the deletion completion list 1004 from the portable reproduction apparatus 102. Then, the deletion execution section 210 refers to the deletion object list 1006 and deletes any content whose identifier is included in the deletion object list 1006 from the portable reproduction apparatus 102. After the deletion is executed, the deletion object list updating section 226 erases the identifier of the deleted content or contents from the deletion object list 1006. Meanwhile, the deletion completion list updating section 212 adds the identifier of each deleted content to the deletion completion list 1004. Further, the management list updating section 224 erases the identifier of the deleted content from the management list 1002 of the portable reproduction apparatus 102.

According to the configuration described above, even if the portable reproduction apparatus 102 does not have a processing capacity sufficient to delete a content held thereby, it can have the content deleted by the information-processing apparatus 100 when it is connected to the information-processing apparatus 100. Further, also when the portable reproduction apparatus 102 remains not connected to the information-processing apparatus 100, it can accept a deletion instruction of a content from the user by writing the identifier of the content into the deletion object list.

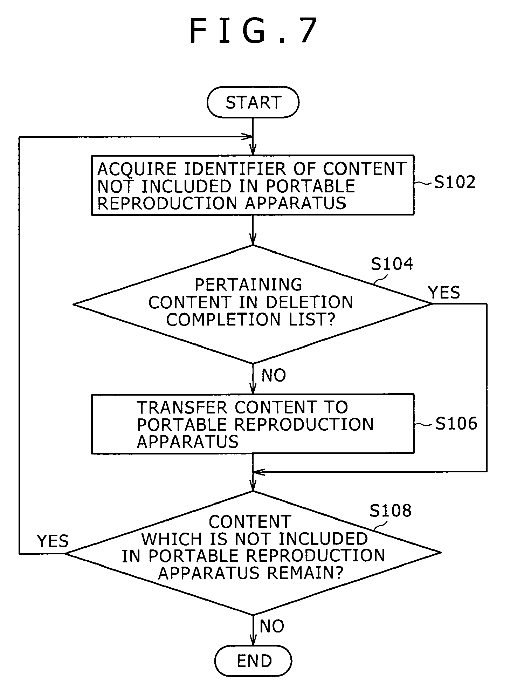

The process of deleting a content from the portable reproduction apparatus 102 by the information-processing apparatus 100 is such as described above. Now, a flow of processes when the information-processing apparatus 100 automatically transfers a content to the portable reproduction apparatus 102 is described with reference to FIG. 7.

### <Flow of the Automatic Transfer Process>

First, the information-processing apparatus 100 acquires the identifier of any content which does not exist in the portable reproduction apparatus 102 at step S102. In particular, the information-processing apparatus 100 refers to the management list of the portable reproduction apparatus 102 and acquires the identifier of any content which does not exist in the management list from the content storage section 214. Then, the information-processing apparatus 100 checks whether or not the identifier acquired at step S102 exists in the deletion completion list at step S104. If the identifier does not exist, then the information-processing apparatus 100 transmits the content which has the identifier to the portable reproduction apparatus 102 at step S106. On the other hand, if the content identifier exists in the deletion completion list, then the information-processing apparatus 100 does not transmit the content of the content identifier to the portable reproduction apparatus 102. Then, the information-processing apparatus 100 checks whether or not it holds any remaining content which does not exist in the portable reproduction apparatus 102 at step S108. If any such content remains, then the processing returns to step S102. In short, the information-processing apparatus 100 determines a permission/inhibition of transmission based on the deletion completion list regarding all of those contents which do not exist in the portable reproduction apparatus 102. Then, the information-processing apparatus 100 transfers those contents whose identifier is not included in the deletion completion list to the portable reproduction apparatus 102.

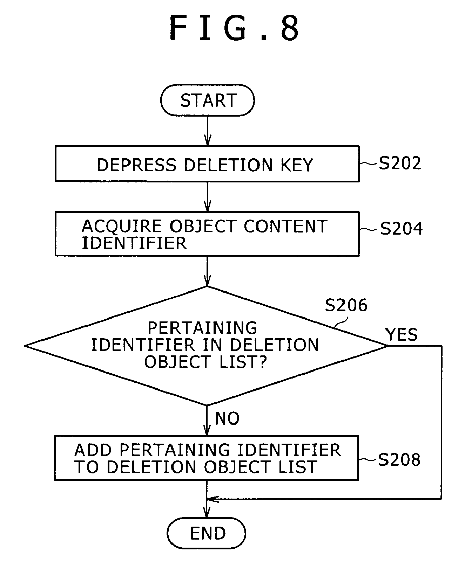

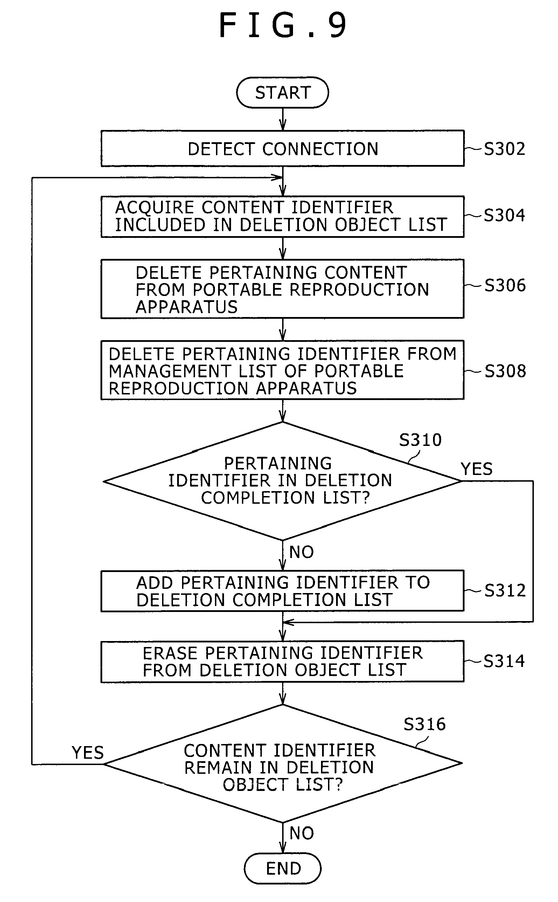

A flow of processes when the information-processing apparatus 100 automatically transfers a content to the portable reproduction apparatus 102 is such as described above. Now, a process of deleting a content from the portable reproduction apparatus 102 is described with reference to FIGS. 8 and 9.

### <Flow of the Deletion Process>

First, a deletion button of the portable reproduction apparatus 102 would be depressed at step S202. In particular, a request to delete an arbitrary content from the portable reproduction apparatus 102 would be issued by the user through the inputting apparatus such as buttons provided on the portable reproduction apparatus 102. Typically, while the user enjoys a content, the user can depress the deletion button to issue an instruction to delete the content being enjoyed. When the deletion button is depressed, the portable reproduction apparatus 102 acquires the identifier of the content which is an object of the deletion request and specifies the object content at step S204. Then, the portable reproduction apparatus 102 checks whether or not the identifier acquired at step S204 is included in the deletion object list provided in the portable reproduction apparatus 102 at step S206. If the identifier is not included in the deletion object list, then the portable reproduction apparatus 102 adds the identifier of the content to the deletion object list. In this manner, the identifier of the content whose deletion from the portable reproduction apparatus 102 is requested is written into the deletion object list in the portable reproduction apparatus 102 by the portable reproduction apparatus 102.

Next, referring to FIG. 9, the information-processing apparatus 100 operates in the following manner. When the portable reproduction apparatus 102 is connected to the information-processing apparatus 100, the information-processing apparatus 100 detects the connection at step S302. After the connection is detected, the information-processing apparatus 100 acquires the deletion object list from the portable reproduction apparatus 102 and acquires the identifier of those contents which are included in the deletion object list at step S304. Then, the information-processing apparatus 100 deletes the content corresponding to each acquire identifier from the portable reproduction apparatus 102 at step S306. If the deletion results in success, then the information-processing apparatus 100 erases the identifier of each content deleted from the management list in the portable reproduction apparatus 102 at step S308. Further, the information-processing apparatus 100 checks whether or not the identifier of any deleted content is included in the deletion completion list in the portable reproduction apparatus 102 at step S310. If no such identifier is included, then the information-processing apparatus 100 adds the identifier to the deletion completion list at step S312. Then, the information-processing apparatus 100 erases the identifier of the deleted content from the deletion object list at step S314. The information-processing apparatus 100 performs the processes at steps S304 to S314 for the identifier of all of the contents included in the deletion object list. Then, if it is determined at step S316 that no identifier of any content remains in the deletion object list, then the information-processing apparatus 100 ends its processing.

In this manner, according to an embodiment of the present invention, a content in the portable reproduction apparatus 102 is deleted based on the deletion object list by the information-processing apparatus 100.

### <Example of Use of the Deletion Object List>

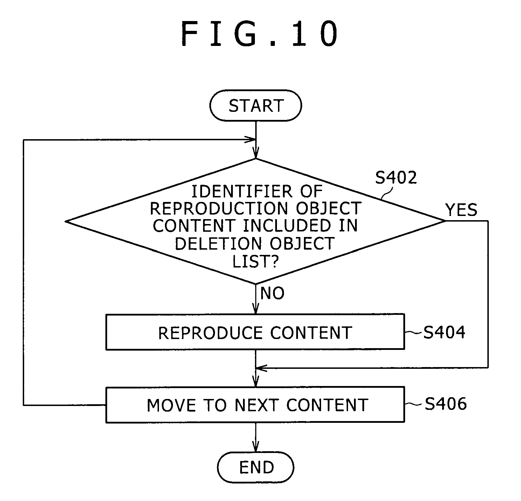

Now, another using method of the deletion object list is described with reference to FIG. 10. In FIG. 10, the portable reproduction apparatus 102 refers to the deletion object list when it reproduces a content. The portable reproduction apparatus 102 checks, at step S402, whether or not the identifier of a content of a reproduction object exists in the deletion object list when it tries to reproduce, for example, contents stored in the storage apparatus in the portable reproduction apparatus 102 successively in order or at random. If such an identifier does not exist, then the portable reproduction apparatus 102 reproduces the content at step S404. However, if such an identifier exists, then the portable reproduction apparatus 102 does not reproduce the content but shifts the processing object to a next content of the reproduction object at step S406. According to the configuration described, the portable reproduction apparatus 102 can prevent reproduction of a content whose deletion is requested from the user. Therefore, even if the content is not actually deleted from the portable reproduction apparatus 102, the content whose deletion is requested by the user looks deleted from the portable reproduction apparatus 102 to the user.

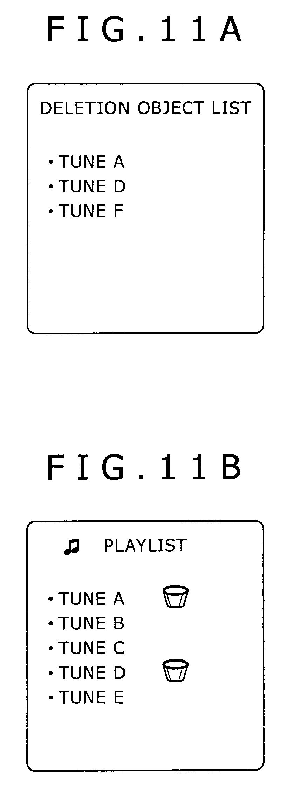

Or, a countermeasure may be provided which allows the user to confirm a content included in the deletion object list. FIGS. 11A and 11B show an example wherein information relating to a content included in the deletion object list is displayed on the screen provided on the portable reproduction apparatus 102. For example, a table of tune names (names of musical pieces) corresponding to contents included in the deletion object list may be displayed on the screen of the portable reproduction apparatus 102 as seen in FIG. 11A. Or, when the portable reproduction apparatus 102 displays a playlist indicating a reproduction order of contents on the screen thereof, each content included in the deletion object list may be displayed together with an icon added thereto as seen in FIG. 11B. The icon indicates that the corresponding content is included in the deletion object list. In FIG. 11B, such an icon as just described is formed as an icon of a shape of a trash can.

A preferred embodiment of the present invention is described above. However, it is a matter of course that the present invention is not limited to the specific embodiment described above. It is apparent that various alterations or modifications may be made by those skilled in the art within the scope of the invention described in the claims, and it is to be understood that also such alterations and modifications naturally fall within the technical scope of the present invention.

For example, in the embodiment described above, a content in the portable reproduction apparatus 102 is deleted by the information-processing apparatus 100 connected to the portable reproduction apparatus 102 after it is registered into the deletion object list in the portable reproduction apparatus 102. However, the present invention is not limited to the particular example. For example, a content in the portable reproduction apparatus may be deleted by the portable reproduction apparatus itself. Further, also where the information-processing apparatus deletes a content in the portable reproduction apparatus, a content designated through a GUI of the information-processing apparatus by the user may be deleted from the portable reproduction apparatus without depending upon the deletion object list as described above.

Further, in the embodiment described hereinabove, the deletion completion list which is a list of contents deleted from the portable reproduction apparatus 102 is held by the portable reproduction apparatus 102. However, the present invention is not limited to the particular example. For example, the deletion completion list may be held by the information-processing apparatus or by both of the portable reproduction apparatus and the information-processing apparatus. Where the information-processing apparatus holds the deletion completion list, a process that a content included in the deletion completion list held by the information-processing apparatus is not transferred to all of portable reproduction apparatus connected to the information-processing apparatus can be performed. Therefore, for example, where one user owns a plurality of portable reproduction apparatus, a content deleted once by any of the portable reproduction apparatus is not transferred also in a case wherein any of the portable reproduction apparatus is connected to the information-processing apparatus later. Therefore, the user need not delete the same content on any of the portable transmission apparatus.

While a preferred embodiment of the present invention has been described using specific terms, such description is for illustrative purposes only, and it is to be understood that changes and variations may be made without departing from the spirit or scope of the following claims.

## Claims

1. An information-processing apparatus capable of transmitting a content to a portable reproduction apparatus which can reproduce the content, comprising:
a content storage section configured to store contents in a coordinated relationship with identifiers individually for identifying the contents;
a transmission content acquisition section configured to acquire the identifier of any content to be transmitted to the portable reproduction apparatus from said content storage section;
a deletion completion list acquisition section configured to acquire a deletion completion list which includes the identifier of any content deleted from the portable reproduction apparatus;
a transmission permission/inhibition determine section configured to permit transmission of a content to the portable reproduction apparatus when the identifier of the content acquired by said transmission content acquisition section is not included in the deletion completion list acquired by said deletion completion list acquisition section; and
a content transmission section configured to transmit any content whose transmission is permitted by said transmission permission/inhibition determine section to the portable reproduction apparatus.

2. The information-processing apparatus according to claim 1, further comprising:
a deletion execution section configured to delete a content stored in the portable reproduction apparatus connected to said information-processing apparatus from the portable reproduction apparatus; and
a deletion completion list updating section configured to add the identifier of the content deleted by said deletion execution section to the deletion completion list.

3. The information-processing apparatus according to claim 2, further comprising:
a connection detection section configured to detect communication connection of said information-processing apparatus to the portable reproduction apparatus; and
a deletion object list acquisition section configured to acquire, when the communication connection to the portable reproduction apparatus is detected by said connection detection section, a deletion object list which includes the identifier of any content whose deletion is requested on the portable reproduction apparatus from the portable reproduction apparatus;
said deletion execution section deleting the content corresponding to any identifier included in the deletion object list from the portable reproduction apparatus.

4. The information-processing apparatus according to claim 1, further comprising:
a selection section configured to allow selection of a content whose transfer to the portable reproduction apparatus is requested; and
a deletion completion list updating section configured to erase, when the identifier of the content selected by said selection section is included in the deletion completion list, the identifier from the deletion completion list.

5. The information-processing apparatus according to claim 4, wherein said content transmission section transmits the content selected by said selection section to the portable reproduction apparatus irrespective of whether or not the identifier of the content is included in the deletion completion list.

6. The information-processing apparatus according to any preceding claim, further comprising:
a management list acquisition section configured to acquire a management list in which the identifiers of the contents stored in the portable reproduction apparatus are included from the portable reproduction apparatus;
wherein said transmission content acquisition section acquiring the identifier of any content which is not included in the management list from the portable reproduction apparatus.

7. The information-processing apparatus according to any preceding claim, wherein said deletion completion list acquisition section acquires the deletion completion list stored in the portable reproduction apparatus.

8. A storage medium on or in which a computer program is stored, the computer program causing an information-processing apparatus, which is capable of transmitting a content to a portable reproduction apparatus which can reproduce the content, to execute:
a transmission content acquisition process of acquiring, from a content storage section in which contents are stored in a coordinated relationship with identifiers individually for identifying the contents, the identifier of any content to be transmitted to the portable reproduction apparatus;
a deletion completion list acquisition process of acquiring a deletion completion list which includes the identifier of any content deleted from the portable reproduction apparatus from the portable reproduction apparatus;
a transmission permission/inhibition determine process of permitting transmission of a content to the portable reproduction apparatus when the identifier of the content acquired by the transmission content acquisition process is not included in the deletion completion list acquired by the deletion completion list acquisition process; and
a content transmission process of transmitting any content whose transmission is permitted by the transmission permission/inhibition determine process to the portable reproduction apparatus.

9. An information-processing method for an information-processing apparatus for transmitting a content to a portable reproduction apparatus which can reproduce the content, comprising the steps of:
acquiring, from a content storage section in which contents are stored in a coordinated relationship with identifiers individually for identifying the contents, the identifier of any content to be transmitted to the portable reproduction apparatus;
acquiring a deletion completion list which includes the identifier of any content deleted from the portable reproduction apparatus from the portable reproduction apparatus;
permitting transmission of a content to the portable reproduction apparatus when the identifier of the content acquired at the step of transmission content acquisition is not included in the deletion completion list acquired at the step of deletion completion list acquisition; and
transmitting any content whose transmission is permitted at the step of transmission permission/inhibition determine to the portable reproduction apparatus.

10. The information-processing method according to claim 9, further comprising the steps of:
deleting a content stored in the portable reproduction apparatus connected to said information-processing apparatus from the portable reproduction apparatus; and
adding the identifier of the content deleted at the step of deletion execution to the deletion completion list.

11. The information-processing method according to claim 10, further comprising the steps of:
detecting communication connection of said information-processing apparatus to the portable reproduction apparatus; and
acquiring, when the communication connection to the portable reproduction apparatus is detected at the step of connection detection, a deletion object list which includes the identifier of any content whose deletion is requested on the portable reproduction apparatus from the portable reproduction apparatus;
wherein the content corresponding to any identifier included in the deletion object list being deleted from the portable reproduction apparatus at the step of deletion execution.

12. The information-processing method according to claim 9, further comprising the steps of:
allowing selection of a content whose transfer to the portable reproduction apparatus is requested; and
erasing, when the identifier of the content selected at the step of selection is included in the deletion completion list, the identifier from the deletion completion list.

13. The information-processing method according to claim 9, further comprising the step of:
acquiring a management list in which the identifiers of the contents stored in the portable reproduction apparatus are included from the portable reproduction apparatus;
wherein the identifier of any content which is not included in the management list being acquired from the portable reproduction apparatus at the step of transmission content acquisition.
